# FASCICULE DE BREVET EUROPEEN

(11) **EP 0 996 663 B1**
(45) Date de publication et mention de la délivrance du brevet: **17.10.2001**
(21) Numéro de dépôt: 98942555.8
(22) Date de dépôt: 14.07.1998
(51) Int. Cl.: C08J 7/04, C09D 129/04

(54) **FILMS POLYESTER COMPOSITES A PROPRIETES BARRIERE**
POLYESTER-VERBUNDFOLIEN MIT BARRIEREEIGENSCHAFTEN
COMPOSITE POLYESTER FILMS WITH BARRIER PROPERTIES

(30) Priorité: 17.07.1997 FR 9709314
(43) Date de publication de la demande: 03.05.2000
(73) Titulaire: TORAY PLASTICS EUROPE SA, 01701 Miribel (FR)
(72) Inventeur: VEYRAT, Didier, F-69450 Saint-Cyr-au-Mont-d'Or (FR); MAITRE, Eric, F-69280 Marcy-l'Etoile (FR)
(74) Mandataire: Kügele, Bernhard
(86) Numéro de dépôt international: EP9804379
(87) Numéro de publication internationale: WO9903917

(56) Documents cités:
- EP-A- 0 274 662
- EP-A- 0 675 158
- WO-A-89/08558
- DATABASE WPI Section Ch, Week 8521 Derwent Publications Ltd., London, GB; Class A23, AN 85-125285 XP002061849 & JP 60 063161 A (DIAFOIL CO LTD) , 11 avril 1985
- DATABASE WPI Section Ch, Week 8702 Derwent Publications Ltd., London, GB; Class A23, AN 87-011652 XP002061850 & JP 61 270153 A (TOYOBO KK) , 29 novembre 1986

## Description

La présente invention concerne des films composites à base de polyester ayant de bonnes propriétés barrière vis-à-vis des gaz.

Les films en polyester, notamment en polytéréphtalate d'éthylène, sont largement utilisés dans le domaine de l'emballage, en raison de leurs nombreux avantages tels que leurs propriétés mécaniques, leur transparence, leur absence de toxicité, leur absence d'odeur ou de goût.

Cependant, leurs propriétés de barrière aux gaz peuvent limiter leur utilisation dans les applications nécessitant une protection importante des produits emballés contre l'action des gaz extérieurs, en particulier contre l'action de l'oxygène de l'air, ou à l'inverse ne pas permettre de maintenir constante la composition en gaz à l'intérieur des emballages.

Afin de pallier cet inconvénient, il a été proposé dans le brevet GB-A-1 126 952 de déposer sur un film polymérique une solution d'alcool polyvinylique, afin de créer une couche d'alcool polyvinylique, ce dernier composé ayant de bonnes propriétés barrière aux gaz. Afin de permettre une bonne adhésion de la couche d'alcool polyvinylique sur les films en acétate de cellulose, en polycarbonate ou en polytéréphtalate d'éthylène, une couche intermédiaire d'un adhésif en polyuréthanne est disposée entre le film de base et la couche d'alcool polyvinylique.

Le brevet EP-A-0 254 468 décrit également un film composite composant un film de base en polymère thermoplastique synthétique, tel que polyamide, polyéthylène, polypropylène ou polyester, ayant 2 revêtements sur une même face du film de base ; le premier revêtement est adjacent au film de base et est constitué d'un primaire uréthanne dans un solvant, qui permet à l'état sec à une dispersion en solution aqueuse d'alcool polyvinylique de mouiller le primaire, le deuxième revêtement est placé sur la surface séchée et libre du premier revêtement et comprend un matériau à base d'alcool polyvinylique servant de barrière aux gaz.

La présente invention est constituée par des films en polyester à bonnes propriétés barrière vis-à-vis des gaz, grâce à un revêtement comportant de l'alcool polyvinylique, disposé directement sur la surface du film polyester sans présence d'une couche intermédiaire adhésive, tout en ayant de bonnes propriétés d'adhésion entre le film de base polyester et le revêtement.

Plus précisément, elle concerne un film composite étiré biaxialement, à base de polyester et ayant des propriétés barrière vis-à-vis des gaz améliorées, caractérisé en ce qu'il comporte un film de base en polyester ayant de 5 µm à 50 µm, revêtu sur l'une de ses deux faces par une couche comportant de l'alcool polyvinylique, ayant un degré de polymérisation moyen en nombre égal ou supérieur à 350 et un taux d'hydrolyse égal ou supérieur à 95 %, et un copolyester hydrodispersable à motifs sulfonyloxy, et ledit film composite présentant une perméabilité à l'oxygène mesurée à 23°C sous 50 % d'humidité relative, inférieure ou égale à 5 cm³/m²/24 h.

Un taux d'hydrolyse (ou de saponification) de 95 % de l'alcool polyvinylique signifie que ledit alcool polyvinylique comporte 95 % de motifs alcool vinylique dans sa formule. Les termes taux d'hydrolyse, taux de saponification ou teneur en motifs alcool vinylique seront donc utilisés indifféremment dans le présent texte.

Le polyester constituant le film de base peut être choisi parmi les polyesters auxquels on fait appel habituellement pour l'obtention de films semi-cristallins bi-orientés. Il s'agit de polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs ou halogénures par exemple) et d'un ou plusieurs glycols aliphatiques. Comme exemples d'acides aromatiques, on peut citer les acides phtalique, téréphtalique, isophtalique, naphtalènedicarboxylique-2,5 ; naphtalène-dicarboxylique-2,6. Ces acides peuvent être associés à une quantité mineure d'un ou plusieurs acides dicarboxliques aliphatiques ou cycloaliphatiques, tels que les acides adipique, azélaïque, hexahydrotéréphtalique. Comme exemples non limitatifs de diols aliphatiques, on peut citer l'éthylèneglycol ; le propanediol-1,3 ; le butanediol-1,4. Ces diols peuvent être associés à une quantité mineure d'un ou plusieurs diols aliphatiques plus condensés en carbone (néopentylglycol par exemple) ou cycloaliphatiques (cyclohexanediméthanol). Préférentiellement, les polyesters filmogènes cristallisables sont des polytéréphtalates ou des polynaphtalène-dicarboxylates d'alkylènediol et, en particulier, le polytéréphtalate d'éthylèneglycol (PET) ou de butanediol-1,4 ou des copolyesters comportant au moins 80 % en moles de motifs téréphtalate d'éthylèneglycol. Avantageusement, le polyester est un polytéréphtalate d'éthylèneglycol dont la viscosité intrinsèque mesurée à 25°C dans l'ortho-chlorophénol est comprise entre 0,6 et 0,75 dl/g.

Le polyester constituant le film de base doit être choisi de telle façon que sa température de début de fusion soit supérieure à la température, à laquelle le film biétiré comportant la couche comprenant l'alcool polyvinylique et le copolyester hydrodispersable est chauffé lors de sa préparation.

Lorsque l'épaisseur de la couche comprenant de l'alcool polyvinylique et un copolyester hydrosoluble à motifs sulfonyloxy est inférieure à 0,6 µm, la rugosité moyenne Rz du film de base (telle que définie dans la norme DIN 4768) est inférieure ou égale à 0,40 µm sur la face du film comportant la couche d'alcool polyvinylique et de copolyester hydrodispersable et cette dite face ne comporte en moyenne pas plus de 20 pics ayant une hauteur égale ou supérieure à 1 micromètre et pas plus de 150 pics ayant une hauteur comprise entre 0,4 et 1 micromètre, par millimètre carré.

La distribution de hauteurs de pics, mentionnée précédemment pour définir la topographie de surface du film de base en polyester, peut notamment être déterminée, de manière connue, par l'observation au microscope interférométrique, permettant de compter le nombre d'anneaux d'interférence pour une lumière de longueur d'onde connue. Les interféromètres les plus fréquemment utilisés sont les interféromètres de NOMARSKI ou de MIRAU ou de MICHELSON.

Pour des mises en oeuvre industrielles des procédés de préparation des films de l'invention, dans lesquelles la vitesse machine à laquelle est soumis le film est généralement supérieure à 100 mètres par minute, il est plus particulièrement préféré que la face du film de base comportant la couche d'alcool polyvinylique et de copolyester hydrodispersable ne comporte en moyenne pas plus de 20 pics ayant une hauteur égale ou supérieure à 1 micromètre et pas plus de 100 pics ayant une hauteur comprise entre 0,4 et 1 micromètre, par millimètre carré.

Les copolyesters hydrodispersables à motifs sulfonyloxy présents avec l'alcool polyvinylique dans le revêtement sont des copolyesters dérivés d'au moins un acide aromatique dicarboxylique et d'au moins un diol aliphatique et comportant une pluralité de groupes sulfonyloxy de formule générale (I) :

-(-SO₃-)ₙM (I)

dans laquelle n est égal à 1 ou 2, M représente un atome d'hydrogène, un métal alcalin ou alcalino-terreux, un cation ammonium ou un cation ammonium quaternaire.

Par "copolyester hydrodispersable", on désigne dans la présente demande des copolyesters solubles dans l'eau ou des copolyesters formant des dispersions stables homogènes.

Les copolyesters hydrodispersables à groupes sulfonyloxy sont des produits connus, décrits notamment dans le brevet FR 1 602 002 et dans le brevet EP-A-0 540 374, auxquels on peut se référer pour plus de précisions sur leur préparation et leur composition. Ils sont obtenus par polycondensation d'un ou plusieurs acides aromatiques dicarboxyliques avec un ou plusieurs diols aliphatiques et au moins un composé difonctionnel comportant au moins un groupe sulfonyloxy de formule (I). Par commodité, dans la suite de l'exposé, l'expression "groupe sulfonyloxy" désignera aussi bien les groupes hydroxysulfonyle que les sels alcalins, alcalino-terreux ou d'ammonium qui en dérivent.

Parmi les acides aromatiques dicarboxyliques servant à préparer les copolyesters hydrodispersables, on peut citer à titre d'exemples les acides téréphtalique, isophtalique, orthophtalique, naphtalènedicarboxylique-1,4. Ces acides peuvent être utilisés seuls ou en mélanges. Parmi les acides précités, on met en oeuvre de préférence, pour la préparation des copolyesters hydrodispersables entrant dans la composition des films de l'invention, les acides téréphtalique et isophtalique seuls ou en mélanges entre-eux ou avec d'autres acides dicarboxyliques aromatiques. Les mélanges d'acide téréphtalique avec un ou plusieurs autres acides dicarboxyliques aromatiques et en particulier avec l'acide isophtalique conviennent tout particulièrement bien. Dans ce cas, la quantité d'acide téréphtalique exprimée en moles peut varier entre 20 et 99 % du nombre total de moles de diacides non sulfonés et de préférence entre 30 et 95 %.

Pour la préparation des copolyesters hydrodispersables, des acides dicarboxyliques aliphatiques comportant de 3 à 15 atomes de carbone peuvent être associés aux diacides aromatiques. Plus particulièrement, tout ou partie de l'acide dicarboxylique aromatique utilisé avec l'acide téréphtalique, tel que l'acide isophtalique, peut être remplacé par un ou plusieurs acides aliphatiques, tels que les acides adipique, glutarique, succinique, subérique, sébacique, dodécanoïque.

Comme exemples de diols entrant dans la composition des copolyesters hydrodispersables à groupes sulfonyloxy, on peut citer l'éthylèneglycol, le butanediol-1,4, le butanediol-1,5, le propanediol-1,3, le propanediol-1,2, le diméthyl-2,2 propanediol-1,3 (ou néopentylglycol), le pentanediol-1,5, l'hexanediol-1,6, le diéthylèneglycol, le triéthylèneglycol, le tétraéthylèneglycol, le cyclohexanediméthanol. L'éthylèneglycol et ses oligomères conviennent tout particulièrement bien. Ils peuvent être présents seuls ou en mélange entre-eux et/ou avec d'autres diols. La présence dans les copolyesters hydrodispersables de motifs provenant de l'éthylèneglycol et de ses oligomères est préférée.

Les groupes sulfonyloxy des copolyesters hydrodispersables sont introduits par l'intermédiaire d'un composé difonctionnel à groupe sulfonyloxy, susceptible de réagir avec les diols au cours de la polycondensation. Des exemples de tels composés sont cités dans le brevet EP-A-0 540 374. De préférence les motifs sulfonyloxy proviennent de sels de métaux alcalins d'acides aromatiques dicarboxyliques, tels que les acides sulfotéréphtaliques, sulfoisophtaliques, sulfophtaliques, sulfo-4 naphtalènedicarboxylique-2,7, sulfo-bis(hydroxycarbonyl)-4,4' diphénylsulfones, sulfodiphényldicarboxyliques, sulfo-bis(hydroxycarbonyl)4,4' diphénylméthane, sulfophénoxy-5 isophtaliques.

On préfère les copolyesters hydrodispersables comportant les motifs sodiooxysulfonyl-5 isophtalate.

Dans les copolyesters hydrodispersables, les motifs acides dicarboxyliques à motifs sulfonyloxy représentent de 5 à 30 moles pour 100 moles de motifs acides dicarboxyliques et de préférence de 8 à 15 moles pour 100 moles.

Le revêtement d'alcool polyvinylique et de copolyester hydrodispersable présente un rapport pondéral alcool polyvinylique/copolyester hydrodispersable de 99/1 à 50/50. De préférence, ce rapport pondéral alcool polyvinylique/copolyester hydrodispersable est compris entre 97/3 et 80/20 et encore plus préférentiellement entre 95/5 et 85/15.

L'autre face des films composites de l'invention, dite face dorsale, doit présenter des propriétés de glissant suffisantes pour permettre une manipulation facile du film, notamment son enroulement sur les différents rouleaux-guides lors des étirages ou son enroulement sur lui-même.

Ces propriétés de glissant peuvent être apportées de différentes manières. Une des façons les plus courantes de procéder consiste à incorporer dans le polyester, avant la transformation en film, des charges solides inertes. Ces charges sont généralement des charges minérales, telles que par exemple la silice, le dioxyde de titane, le dioxyde de zirconium, l'alumine, les mélanges silice/alumine, les silicates, le carbonate de calcium, le sulfate de baryum. Ces charges peuvent également être constituées de particules de polymères.

Le diamètre médian en volume des charges est en général compris entre 1 et 10 micromètres et de préférence entre 1 et 5 micromètres.

La teneur en charge du film est habituellement comprises entre 0,02 % et 1 % en poids par rapport au poids du polyester.

Une variante intéressante de l'invention consiste à avoir un film polyester de base présentant des propriétés de surface, notamment des rugosités, différentes sur chacune de ses deux faces. Les rugosités moyennes Rz différentes peuvent par exemple être égale ou supérieure à 0,15 micromètre sur la face dorsale du film, et inférieure ou égale à 0,40 micromètre sur la face du film de base comportant le revêtement d'alcool polyvinylique et de copolyester hydrodispersable.

Ainsi le film de base en polyester peut être constitué de deux couches présentant des propriétés de surface, notamment des rugosités, différentes.

L'obtention de tels films dissymétriques peut se faire selon la technique de la coextrusion de 2 polyesters comportant des taux de charges différents et le cas échéant des charges différentes. Commodément le polyester utilisé est le même pour les 2 couches coextrudées et la couche devant recevoir le revêtement d'alcool polyvinylique et de copolyester hydrodispersable est plus faiblement chargée. Les épaisseurs relatives des 2 couches de polyester constituant le film polyester de base peuvent varier largement.

Généralement, la couche plus faiblement chargée recevant le revêtement d'alcool polyvinylique et de copolyester hydrodispersable a une épaisseur supérieure ou égale à 0,5 µm, de préférence supérieure ou égale à 1,0 µm.

Dans le cadre de l'invention, il n'est pas exclu d'obtenir un film de base en polyester, présentant des propriétés de surface différentes sur les deux faces, par d'autre moyens connus de l'art antérieur.

Ainsi on peut conférer, selon le brevet EP-A-0 378 954, à la face dorsale du film de base un bon glissant, en déposant sur ladite face dorsale un polymère modifié, obtenu par polymérisation radicalaire en phase aqueuse, d'au moins un monomère acrylique et d'un polyester dissipable dans l'eau, dérivé d'au moins un acide aromatique dicarboxylique et d'au moins un diol aliphatique et comportant une pluralité de groupes sulfonyloxy, notamment sulfonate de sodium.

Selon le mode d'enduction utilisé, le revêtement d'alcool polyvinylique et de copolyester hydrodispersable a une épaisseur égale ou inférieure à 3 µm. Cette épaisseur peut si on le souhaite être inférieure ou égale à 0,60 µm, voire même à 0,20 µm, si l'on souhaite améliorer la recyclabilité du film selon l'invention. En pratique, on descend rarement à des épaisseurs inférieures à 0,05 µm.

Une variante avantageuse des films composites de l'invention concerne lesdits films qui comportent sur le revêtement alcool polyvinylique/copolyester hydrodispersable une couche d'alcool polyvinylique. Cette couche supplémentaire permet de diminuer encore la perméabilité aux gaz des films composites. A titre d'exemple, elle a généralement une épaisseur de 0,1 µm à 10 µm.

L'invention concerne également des films composites tels que ceux décrits précédemment, qui comportent en outre sur l'une de leurs faces une couche d'impression ou un primaire d'impression ou encore, sur la face libre du revêtement d'alcool polyvinylique et de copolyester hydrodispersable ou, le cas échéant, sur la face libre de la couche supplémentaire d'alcool polyvinylique, une couche métallique.

La couche d'impression peut être déposée par les méthodes d'impression connues, telles que par exemple l'héliogravure, la flexographie, la sérigraphie. De préférence, on utilisera des encres en solution ou dispersion non-aqueuse.

La couche métallique qui est située sur la surface du revêtement alcool polyvinylique/polyester hydrodispersable qui n'est pas en contact avec le film polyester, ou sur la face libre de la couche supplémentaire d'alcool polyvinylique, est composée d'un métal pouvant être déposé selon les différentes techniques connues. Le métal est choisi le plus souvent parmi l'aluminium, le cuivre, le chrome, le nickel, l'argent. Pour des raisons pratiques et économiques, le métal mis en oeuvre de préférence est l'aluminium.

L'épaisseur de la couche métallique se situe généralement entre 0,01 µm et 0,06 µm. Ces épaisseurs sont déterminées par la mesure de la densité optique (mesures effectuées sur un appareil de marque MACBETH-TD102). Elles correspondent à des densités optiques de 1 à 3,6.

Sur la face libre du film de base polyester, on peut également avoir une couche thermoscellable qui peut être de type polyoléfine (polyéthylènes radicalaires, linéaires, métallocènes, polypropylènes, copolymères éthylène-vinyl acétate, résines ionomères par exemple) et/ou copolyester. Ces films complexes peuvent être obtenus par contre-collage à l'aide d'adhésif mono- ou bi-composant, par extrusion-couchage, par coextrusion ou enduction. Cette couche thermoscellable peut avoir une fonction unique de couche scellable ou avoir une fonction double de couche scellable-pelable.

Les films complexes ainsi réalisés peuvent servir à la confection d'emballages, tels que notamment sachets, opercules de barquettes, sur-emballages, destinés à contenir des produits sensibles à l'oxydation. Ils sont tout particulièrement adaptés au conditionnement sous atmosphère modifiée.

La présente invention concerne également un procédé de préparation de films décrits précédemment.

Plus précisément, elle consiste en un procédé de préparation de films composites à base d'un film de polyester qui comporte sur une de ses faces revêtement alcool polyvinylique/polyester hydrodispersable, ledit procédé étant caractérisé en ce que l'on enduit le film de base en polyester, sur une des ses faces, à l'aide d'une solution aqueuse comprenant un alcool polyvinylique présentant au moins 95 % de motifs alcool vinylique, ledit alcool polyvinylique présentant en solution aqueuse à 4 % et à 20°C une viscosité égale ou supérieure à 4 mPa.s et un copolyester hydrodispersable, le revêtement alcool polyvinylique/polyester hydrodispersable pouvant lui-même être ensuite enduit à l'aide d'une solution aqueuse d'alcool polyvinylique, et en ce que l'on traite thermiquement ledit film enduit à une température égale ou supérieure à 170°C.

L'épaisseur du revêtement alcool polyvinylique/polyester hydrodispersable est de préférence inférieure ou égale à 3 micromètres.

L'épaisseur de la couche supplémentaire d'alcool polyvinylique est de préférence de 0,1 à 10 micromètres.

Lorsque l'on souhaite réaliser un revêtement alcool polyvinylique/polyester hydrodispersable ayant une épaisseur inférieure à 0,6 micromètre, il est préférable que la face du film en polyester sur laquelle est réalisée l'enduction de la solution alcool polyvinylique/copolyester hydrodispersable présente une rugosité moyenne Rz inférieure ou égale à 0,40 µm et ne comporte en moyenne pas plus de 20 pics ayant une hauteur égale ou supérieure à 1 micromètre et pas plus de 150 pics ayant une hauteur comprise entre 0,4 et 1 micromètre, par millimètre carré.

L'enduction du film de base en polyester par la solution aqueuse alcool polyvinylique/copolyester hydrodispersable peut être réalisée en ligne ou en reprise. Lorque l'on opère par enduction en ligne, l'épaisseur du revêtement est plus faible et il est préférable d'avoir une topographie de surface du film de base plus contraignante.

Dans un tel cas, par exemple dans le cadre d'une mise en oeuvre industrielle à grande vitesse machine (généralement plus de 100 mètres par minute) du procédé selon l'invention, il est avantageux que l'enduction par la solution aqueuse alcool polyvinylique/copolyester hydrodispersable soit réalisée sur une face du film en polyester ne comportant en moyenne pas plus de 20 pics ayant une hauteur égale ou supérieure à 1 micromètre et pas plus de 100 pics ayant une hauteur comprise entre 0,4 et 1 micromètre, par millimètre carré.

Lorque l'on opère par enduction en reprise, on peut avoir une surface du film en polyester qui soit plus rugueuse que pour l'enduction en ligne, sans que cela soit pour autant indispensable.

Avant l'enduction du film de base, la surface de celui-ci subit généralement un traitement physique (tel que corona, flamme, plasma par exemple) destiné assurer un bon étalement de la couche d'alcool polyvinylique sur ledit film de base. Ce traitement permet d'amener la tension superficielle du film étiré monoaxialement à une valeur supérieure à celle de l'enduction alcool polyvinylique/copolyester hydrodispersable et de préférence à une valeur égale ou supérieure à 54 mN.m.

La solution aqueuse alcool polyvinylique/copolyester hydrodispersable mise en oeuvre a généralement une concentration de 1 % à 20 % en poids par poids et de préférence de 5 % à 15 % en poids par poids. Généralement on commence par préparer une solution d'alcool polyvinylique. Cette solution est préparée soigneusement, d'abord à froid sous agitation simple, puis en chauffant à une température n'excédant pas 95°C ; après refroidissement, elle est filtrée. Cette solution doit être exempte de gels. L'absence de gels peut être contrôlée grâce à des mesures de turbidité, d'extrait sec et d'indice de réfraction. Dans cette solution d'alcool polyvinylique est dissous ou dispersé le copolyester hydrodispersable.

Le rapport pondéral alcool polyvinylique/copolyester hydrodispersable dans ladite solution aqueuse est de 99/1 à 50/50 et se situe de préférence entre 97/3 et 80/20 et encore plus préférentiellement entre 95/5 et 85/15.

L'alcool polyvinylique utilisé dans le procédé de l'invention est un composé disponible dans le commerce. Il peut être utilisé tel quel ou il peut être préparé notamment par hydrolyse de carboxylates de vinyle, plus particulièrement les polyacétates de vinyle ou leurs copolymères riches en motifs acétate de vinyle, tels que les copolymères acétate de vinyle/éthylène (ou EVA). Comme précisé précédemment, l'alcool polyvinylique utilisé comporte au moins 95 % de motifs alcool vinylique (taux d'hydrolyse égal ou supérieur à 95 %). De préférence il en comporte au moins 97 % et encore plus préférentiellement au moins 98 %.

L'alcool polyvinylique utilisé pour la préparation du revêtement alcool polyvinylique/copolyester hydrodispersable du film composite de l'invention présente une viscosité en solution aqueuse à 4 % et à 20°C, mesurée dans un appareil de type Brookfield, égale ou supérieure à 4 centipoises (ou 4 mPa.s), ce qui correspond, avec les incertitudes liées aux mesures, à un degré de polymérisation moyen en nombre égal ou supérieur à 350.

Le choix de la concentration de la solution alcool polyvinylique/copolyester hydrodispersable, ainsi que de l'appareillage servant pour l'enduction, est notamment conditionné par l'épaisseur souhaitée de la couche finale du revêtement alcool polyvinylique/copolyester hydrodispersable.

Sans que le procédé de l'invention puisse se limiter à ce mode de mise en oeuvre, les enductions sont couramment réalisées à l'aide de rouleaux héliogravés, selon la technique dite "reverse gravure".

Dans le cas d'une enduction en ligne, le film de base en polyester est le plus souvent étiré longitudinalement (c'est-à-dire dans le sens de la machine) avant ladite enduction à l'aide de la solution aqueuse alcool polyvinylique/copolyester hydrodispersable, sans que cette variante soit limitative.

Cet étirage peut être effectué en une ou plusieurs étapes, de même que l'étirage qui suit l'enduction.

La température, à laquelle le film enduit est traité, se situe de préférence entre 180°C et 240°C et encore plus préférentiellement entre 200°C et 230°C.

Le film de base en polyester peut être préparé par extrusion d'un polyester tel que défini précédemment, comportant une ou plusieurs charges inertes pour lui conférer en particulier un glissant suffisant. Il peut également être préparé par coextrusion d'une part d'un polyester plus faiblement chargé et d'autre part d'un polyester chargé.

Dans cette deuxième variante, le film de base en polyester comporte une couche chargée rugueuse constituant la face dite dorsale et une couche plus faiblement chargée, constituant la face dite ventrale qui recevra l'enduction de la solution alcool polyvinylique/copolyester hydrodispersable.

La couche de polyester chargé présente généralement une rugosité moyenne Rz supérieure ou égale à 0,15 micromètre et de préférence supérieure ou égale à 0,30 micromètre, tandis que la couche ventrale non chargée ou plus faiblement chargée présente une rugosité totale inférieure ou égale à 0,40 micromètre et de préférence inférieure ou égale à 0,25 micromètre ; comme indiqué précédemment, la face du film de base, sur laquelle sera réalisée l'enduction à l'aide de la solution alcool polyvinylique/copolyester hydrodispersable, ne comporte de préférence en moyenne pas plus de 20 pics ayant une hauteur égale ou supérieure à 1 micromètre et pas plus de 100 pics ayant une hauteur comprise entre 0,4 et 1 micromètre, par millimètre carré.

Le dépôt de la couche métallique est réalisé par tout moyen connu. De manière préférentielle, on utilise la technique d'évaporation sous vide du métal.

Les films composites de l'invention présentent une excellente résistance aux agressions mécaniques, telles que notamment le froissage ou le pliage. Cela signifie que leurs propriétés barrière déjà évoquées ne sont pas ou sont peu diminuées après une telle agression mécanique.

Les exemples qui suivent illustrent l'invention.

### EXEMPLES

### MODE OPERATOIRE GENERAL

On prépare un film composite en polytéréphtalate d'éthylène (PET) par coextrusion d'une part d'un PET comportant 0,7 % de silice obtenue par précipitation de gels et présentant un diamètre moyen de 3,3 micromètres (mesure sur un granulomètre laser de marque SYMPATEC et de type Hélos) qui constitue le film le plus chargé (partie dorsale du film composite support) et d'autre part d'un PET plus faiblement chargé (0,025 % de la même silice) dont la face extérieure recevra l'enduction en alcool polyvinylique (APV)/copolyester hydrodispersable (COPO).

Le film polyester a une épaisseur de 12 micromètres dans les différents exemples ou essais comparatifs et une rugosité moyenne Rz sur la face dorsale de 0,45 micromètre. Il comprend la couche plus faiblement chargée (recevant l'enduction d'APV/copolyester hydrodispersable) qui a une épaisseur de 11,2 micromètres.

Le film coextrudé est d'abord étiré longitudinalement avec un taux d'étirage de 3,4 ; ensuite il subit un traitement corona qui amène sa tension superficielle à 58 mN.m.

La face du film comportant la couche plus faiblement chargée est alors enduite à l'aide d'un système d'enduction héliographique avec un rouleau gravé. La vitesse machine lors de l'enduction est de 200 m/min. L'enduction en ligne (EEL) est effectuée à partir d'une solution aqueuse d'APV et de COPO à 10 % de concentration, soigneusement préparée et exempte de gels. L'APV utilisé présente 98-99 % de motifs alcool vinylique et une viscosité de 5,5 mPa.s (mesurée à 20°C sur une solution aqueuse à 4 % à l'aide d'un viscosimètre de marque Brookfield LV). Le COPO mis en oeuvre est un copolyester d'éthylène et de diéthylène, de masse moléculaire moyenne en nombre d'environ 33 000 et comportant des motifs téréphtalate et isophtalate à raison d'environ 80/20 en poids et 14 % en poids de motifs sodio-oxysulfonyl-5 isophtalate par rapport au poids total du copolyester

Le film enduit subit alors un étirage transversal avec un taux de 4, puis il est traité thermiquement à une température de 225°C. L'épaisseur de la couche APV/COPO est indiquée pour chaque exemple ou essai comparatif.

Pour les exemples ou essais comparatifs décrivant des films comportant deux revêtements, on effectue une enduction en reprise (EER) sur le film biétiré (étirage longitudinal avec un taux d'étirage de 3,4, puis étirage transversal avec un taux de 4).

Sur les différents films séchés à 200°C, on mesure la perméabilité à l'oxygène à 23°C sous 50 % d'humidité relative (PO2 en cm³/m²/24 h) (mesures réalisées sur un appareil de marque OXTRAN, type 300H, de la société MODERN CONTROL INC.) et on effectue un test d'adhésion du revêtement enduit selon le test dit "au ruban adhésif" : on colle un ruban adhésif (3M n°250)sur le film enduit, sur lequel on a préalablement déposé deux couches d'encres (TERCHEM 81), tout d'abord une bleue et ensuite une blanche. Puis on passe une roulette de 4 kg en faisant 5 allers et retours ; on arrache le ruban en tirant manuellement dans l'axe de la feuille ; on note la qualité de l'adhésion en considérant la quantité d'encre arrachée avec le ruban adhésif (notations de 0 à 10 : une note de 8 à 10 signifie une excellente adhésion du revêtement sur le film polyester).

### Exemples 1 et 2

Ces essais sont réalisés avec un film polyester composite dont la face devant recevoir l'enduction APV/COPO présente la distribution de hauteurs de pics suivante par mm² : 7 pics de hauteur > 1µm, 49 pics de hauteur entre 0,4 et 1µm. L'enduction est réalisée en ligne (EEL) avec des solutions aqueuses APV/COPO (rapport pondéral APV/COPO et concentration totale dans la solution indiqués dans le tableau 1 ci-après).

### Exemples 3 et 4

Les exemples 3 et 4 ont été effectués sur le même film composite polyester, mais après l'enduction en ligne réalisée avec une solution APV/COPO, une enduction en reprise sur le film biétiré est réalisée sur le revêtement APV/COPO avec une solution aqueuse d'APV seul. Les mesures sont les mêmes que pour les autres exemples et les résultats sont rassemblés dans le tableau 1 ci-après.

### Essais comparatifs a, b et c

Ces essais ont été effectués avec le même film composite polyester que dans les exemples 1 et 2, mais en effectuant une enduction en ligne avec une solution aqueuse contenant uniquement du COPO, puis en réalisant sur le film biétiré une enduction en reprise avec une solution aqueuse d'APV. On a donc ainsi sur le film polyester de base, deux revêtements successifs, un premier en copolyester hydrodispersable, un second en alcool polyvinylique. Les mesures sont les mêmes que pour les autres exemples et les résultats sont rassemblés dans le tableau 1 ci-après.

### Essai comparatif d

Cet essai a été effectué avec le même film composite polyester que dans les exemples 1 et 2, mais en effectuant une enduction en ligne avec une solution aqueuse contenant uniquement de l'APV. Les mesures sont les mêmes que pour les autres exemples et les résultats sont rassemblés dans le tableau 1 ci-après.

Dans le tableau 1 ci-après les abréviations suivantes sont utilisées en complément des abréviations définies précédemment :
- "Ex" pour "exemple"
- "EC" pour "essai comparatif"
- "Test Ad" pour "test d'adhésion"
- "Concsol p/p" "pour concentration pondérale totale de la solution aqueuse"
- "Epais" pour "épaisseur du revêtement".

**Tableau 1**

| Essais | EEL | | | EER | | | PO2 | Test Ad |
|---|---|---|---|---|---|---|---|---|
| | APV/ COPO | Concsol p/p | Epais en µm | APV | Concsol p/p | Epais en µm | | |
| Ex 1 | 90/10 | 10 % | 0,2 | néant | néant | néant | 1,0 | 10 |
| Ex 2 | 99/01 | 10 % | 0,2 | néant | néant | néant | 1,0 | 8,5 |
| Ex 3 | 90/10 | 10 % | 0,2 | oui | 2,5 % | 2,5 | 0,6 | 9 |
| Ex 4 | 90/10 | 10 % | 0,2 | oui | 10 % | 6 | 0,1 | 9 |
| EC a | 0/100 | 2,5 % | 0,02 | oui | 8 % | 0,41 | 15 | 2 |
| EC b | 0/100 | 5 % | 0,04 | oui | 2 % | 0,07 | 14,6 | 5 |
| EC c | 0/100 | 5 % | 0,04 | oui | 9 % | 0,34 | 7,4 | 5 |
| EC d | 100/0 | 12 % | 0,1 | néant | néant | néant | 2,6 | 5 |

### Exemple 5 et essai comparatif e

Ces essais sont réalisés avec le même film composite polyester que dans les exemples 1 et 2, en effectuant une enduction en ligne avec une solution aqueuse APV/COPO (exemple 5) ou une solution aqueuse d'APV seul (essai comparatif e) ayant une concentration totale dans la solution de 12 %. Le rapport pondéral APV/COPO est de 90/10 et l'APV présente un taux de saponification de 98 %.

Ces films sont métallisés par dépôt d'une couche d'aluminium de 0,035 µm.

On mesure la PO2 des films métallisés dans les conditions indiquées pour les exemples précédents.

Chacun des deux films métallisés est contre-collé par un film en polyéthylène (de 50 µm) à l'aide d'un adhésif polyuréthanne et l'on effectue un test d'adhésion.

Ce test consiste à appliquer sur le film une traction sur un appareil de marque INSTRON 1122 avec une vitesse de 100 mm/min. On mesure ainsi une force de pelage exprimée en grammes pour 15 millimètres. Une force de pelage de 150 g/15 mm est considérée comme satisfaisante pour des films commerciaux métallisés.

Les résultats de ces essais sont rassemblés dans le tableau 2 ci-après.

**Tableau 2**

| **Essais** | **APV/COPO** | **PO2** | **Force de pelage en g/15 mm** |
|---|---|---|---|
| Exemple 5 | 90/10 | 0,1 | 220 |
| Essai comparatif e | 100/0 | 0,1 | 105 |

### Exemple 6 et essai comparatif f

Ces essais sont réalisés avec le même film composite polyester que dans les exemples 1 et 2, en effectuant une enduction en ligne avec une solution aqueuse APV/COPO (exemple 6) ou une solution aqueuse d'APV seul (essai comparatif) ayant une concentration totale dans la solution de 12 %. Le rapport pondéral APV/COPO est de 90/10 et l'APV présente un taux de saponification de 98 %.

On mesure la PO2 des films dans les conditions indiquées pour les exemples précédents.

Chacun des deux films est contre-collé par un film en polyéthylène (de 50 µm) à l'aide d'un adhésif polyuréthanne et l'on effectue le test d'adhésion décrit pour l'exemple 5 et l'essai comparatif e.

Une force de pelage de 250 g/15 mm est considérée comme satisfaisante pour des films commerciaux non métallisés.

Les résultats de ces essais sont rassemblés dans le tableau 3 ci-après.

**Tableau 3**

| **Essais** | **APV/COPO** | **PO2** | **Force de pelage en g/15 mm** |
|---|---|---|---|
| Exemple 6 | 90/10 | 1,0 | 320 |
| Essai comparatif f | 100/0 | 2,6 | 200 |

## Revendications

1. Film composite étiré biaxialement, à base de polyester et ayant des propriétés barrière vis-à-vis des gaz améliorées, **caractérisé en ce qu'**il comporte un film de base en polyester ayant de 5 µm à 50 µm, revêtu sur l'une de ses deux faces par une couche comportant de l'alcool polyvinylique, ayant un degré de polymérisation moyen en nombre égal ou supérieur à 350 et un taux d'hydrolyse égal ou supérieur à 95 %, et un copolyester hydrodispersable à motifs sulfonyloxy, et ledit film composite présentant une perméabilité à l'oxygène, mesurée à 23°C sous 50% d'humidité relative (mesure réalisée sur un appareil de marque OXTRAN, type 300H, de la société MODERN CONTROL INC.), inférieure ou égale à 5 cm³/m²/24h.

2. Film selon la revendication 1, **caractérisé en ce que** le polyester est choisi parmi les polytéréphtalates ou des polynaphtalène-dicarboxylates d'alkylènediol.

3. Film selon la revendication 2, **caractérisé en ce que** le polyester est choisi parmi le polytéréphtalate d'éthylèneglycol ou de butanediol-1,4, et les copolyesters comportant au moins 80 % en moles de motifs téréphtalate d'éthylèneglycol.

4. Film selon l'une des revendications 1 à 3, **caractérisé en ce que** la rugosité moyenne Rz du film de base (telle que définie dans la norme DIN 4768) est inférieure ou égale à 0,40 µm sur la face du film comportant la couche d'alcool polyvinylique et de copolyester hydrodispersable et cette dite face ne comporte en moyenne pas plus de 20 pics ayant une hauteur égale ou supérieure à 1 µm et pas plus de 150 pics ayant une hauteur comprise entre 0,4 et 1 µm, par millimètre carré, lorsque l'épaisseur de la couche comprenant de l'alcool polyvinylique et un copolyester hydrosoluble à motifs sulfonyloxy est inférieure à 0,6 µm.

5. Film selon l'une des revendications 1 à 4, **caractérisé en ce que** la face du film de base comportant la couche d'alcool polyvinylique et de copolyester hydrodispersable ne comporte en moyenne pas plus de 20 pics ayant une hauteur égale ou supérieure à 1 micromètre et pas plus de 100 pics ayant une hauteur comprise entre 0,4 et 1 micromètre, par millimètre carré.

6. Film selon l'une des revendications 1 à 5, **caractérisé en ce que** le copolyester hydrodispersable à motifs sulfonyloxy présent avec l'alcool polyvinylique dans le revêtement est choisi parmi les copolyesters dérivés d'au moins un acide aromatique dicarboxylique et d'au moins un diol aliphatique et comportant une pluralité de groupes sulfonyloxy de formule générale (1) :
- (SO₃-) ₙM (I)
dans laquelle n est égal à 1 ou 2, M représente un atome d'hydrogène, un métal alcalin ou alcalino-terreux, un cation ammonium ou un cation ammonium quaternaire.

7. Film selon la revendication 6, **caractérisé en ce que** l'acide aromatique dicarboxylique, servant à préparer le copolyester hydrodispersable est choisi parmi les acides téréphtalique, isophtalique, orthophtalique, naphtalènedicarboxylique-1,4 et leurs mélanges.

8. Film selon la revendication 7, **caractérisé en ce que** l'acide aromatique dicarboxylique est choisi parmi les mélanges d'acide téréphtalique avec un ou plusieurs autres acides dicarboxyliques aromatiques.

9. Film selon la revendication 8, **caractérisé en ce que** l'acide aromatique dicarboxylique est choisi parmi les mélanges d'acide téréphtalique avec l'acide isophtalique.

10. Film selon l'une des revendications 7 à 9, **caractérisé en ce que** la quantité d'acide téréphtalique exprimée en moles varie entre 20 et 99% du nombre total de moles de diacides non sulfonés, et **en ce que** le copolyester hydrodispersable comporte des motifs sodio-oxysulfonyl-5 isophtalate.

11. Film selon la revendication 10, **caractérisé en ce que** la quantité d'acide téréphtalique exprimée en moles varie entre 30 et 95%

12. Film selon l'une des revendications 6 à 11, **caractérisé en ce que** le diol entrant dans la composition du copolyester hydrodispersable à groupes sulfonyloxy, est choisi parmi l'éthylèneglycol, le butanediol-1,4, le butanediol-1,5, le propanediol-1,3, le propanediol-1,2, le diméthyl-2,2 propanediol-1,3 (ou néopentylglycol), le pentanediol-1,5, l'hexanediol-1,6, le diéthylèneglycol, le triéthylèneglycol, le tétraéthylèneglycol, le cyclohexanediméthanol.

13. Film selon la revendication 12, **caractérisé en ce que** le diol entrant dans la composition du copolyester hydrodispersable à groupes sulfonyloxy, est choisi parmi l'éthylèneglycol et ses oligomères.

14. Film selon l'une des revendications 6 à 13, **caractérisé en ce que** dans le copolyester hydrodispersable les motifs acides dicarboxyliques à motifs sulfonyloxy représentent de 5 à 30 moles pour 100 moles de motifs acides dicarboxyliques.

15. Film selon la revendication 14, **caractérisé en ce que** dans le copolyester hydrodispersable les motifs acides dicarboxyliques à motifs sulfonyloxy représentent de 8 à 15 moles pour 100 moles de motifs acides dicarboxyliques

16. Film selon l'une des revendications 1 à 15, **caractérisé en ce que** le revêtement d'alcool polyvinylique et de copolyester hydrodispersable présente un rapport pondéral alcool polyvinylique/copolyester hydrodispersable de 99/1 à 50/50

17. Film selon la revendication 16, **caractérisé en ce que** le revêtement d'alcool polyvinylique et de copolyester hydrodispersable présente un rapport pondéral alcool polyvinylique/copolyester hydrodispersable compris entre 97/3 et 80/20.

18. Film selon l'une des revendications 1 à 17, **caractérisé en ce que** le revêtement d'alcool polyvinylique et de copolyester hydrodispersable a une épaisseur égale ou inférieure à 3 µm.

19. Film selon l'une des revendications 1 à 18, **caractérisé en ce que** ledit film composite comporte en outre sur la face libre du revêtement d'alcool polyvinylique et de copolyester hydrodispersable une couche d'alcool polyvinylique.

20. Film selon l'une des revendications 1 à 19, **caractérisé en ce que** ledit film composite comporte en outre sur l'une de ses faces une couche d'impression ou un primaire d'impression ou encore, sur la face libre du revêtement d'alcool polyvinylique et de copolyester hydrodispersable ou sur la face libre de la couche supplémentaire d'alcool polyvinylique, une couche métallique.

21. Film selon la revendication 20, **caractérisé en ce que** la couche métallique, située sur la surface du revêtement alcool polyvinylique/polyester hydrodispersable qui n'est pas en contact avec le film polyester ou sur la face libre de la couche supplémentaire d'alcool polyvinylique, est composée d'un métal choisi parmi l'aluminium, le cuivre, le chrome, le nickel, l'argent et

22. Film selon la revendication 21, **caractérisé en ce que** la couche métallique, située sur la surface du revêtement alcool polyvinylique/polyester hydrodispersable qui n'est pas en contact avec le film polyester ou sur la face libre de la couche supplémentaire d'alcool polyvinylique, est composée d'aluminium.

23. Film selon l'une des revendications 20 à 22, **caractérisé en ce que** l'épaisseur de la couche métallique se situe entre 0,01 µm et 0,06 µm.

24. Film selon l'une des revendications 1 à 23, **caractérisé en ce que** le film de base en polyester est constitué de deux couches présentant des rugosités Rz différentes.

25. Film selon la revendication 24, **caractérisé en ce que** le film de base en polyester dissymétrique est réalisé selon la technique de la coextrusion de 2 polyesters comportant des taux de charges différents et le cas échéant des charges différentes.

26. Film selon la revendication 25, **caractérisé en ce que** le polyester utilisé est le même pour les 2 couches coextrudées et la couche devant recevoir la couche d'alcool polyvinylique est plus faiblement chargée.

27. Procédé de préparation de films composites selon l'une des revendications 1 à 26, **caractérisé en ce que** l'on enduit le film de base en polyester, sur une de ses faces, à l'aide d'une solution aqueuse comprenant un alcool polyvinylique présentant au moins 95% de motifs alcool vinylique, ledit alcool polyvinylique présentant en solution aqueuse à 4% et à 20°C une viscosité égale ou supérieure à 4 mPa.s (mesurée à l'aide d'un viscosimètre de marque Brookfield LV) et un copolyester hydrodispersable, et **en ce que** l'on traite thermiquement ledit film enduit à une température égale ou supérieure à 170°C.

28. Procédé selon la revendication 27, **caractérisé en ce que** la face du film en polyester sur laquelle est réalisée l'enduction de la solution alcool polyvinylique/copolyester hydrodispersable présente une rugosité moyenne Rz (telle que définie dans la norme DIN 4768) inférieure ou égale à 0,40 µm et ne comporte en moyenne pas plus de 20 pics ayant une hauteur égale ou supérieure à 1 micromètre et pas plus de 150 pics ayant une hauteur comprise entre 0,4 et 1 micromètre, par millimètre carré, lorsque l'on souhaite réaliser un revêtement alcool polyvinylique/polyester hydroxdispersable ayant une épaisseur inférieure à 0,6 micromètre.

29. Procédé selon l'une des revendications 27 ou 28, **caractérisé en ce que** l'enduction du film de base en polyester par une solution aqueuse d'alcool polyvinylique et de copolyester hydrodispersable est réalisée en ligne ou en reprise.

30. Procédé selon la revendication 29, **caractérisé en ce que** l'enduction est réalisée en ligne.

31. Procédé selon l'une des revendications 27 à 30, **caractérisé en ce que** la solution aqueuse alcool polyvinylique/copolyester hydrodispersable mise en oeuvre a une concentration de 1% à 20% en poids par poids.

32. Procédé selon la revendication 31, **caractérisé en ce que** la solution aqueuse alcool polyvinylique/copolyester hydrodispersable mise en oeuvre a une concentration de 5% à 15% en poids par poids.

33. Procédé selon l'une des revendications 27 à 32, **caractérisé en ce que** le rapport pondéral alcool polyvinylique/copolyester hydrodispersable dans la solution aqueuse est de 99/1 à 50/50.

34. Procédé selon la revendication 33, **caractérisé en ce que** le rapport pondéral alcool polyvinylique/copolyester hydrodispersable dans la solution aqueuse se situe entre 97/3 et 80/20.

35. Procédé selon l'une des revendications 27 à 34, **caractérisé en ce que** l'alcool polyvinylique utilisé comporte au moins 97% de motifs alcool vinylique.

36. Procédé selon la revendication 35, **caractérisé en ce que** l'alcool polyvinylique utilisé comporte au moins 98% de motifs alcool vinylique.

37. Procédé selon l'une des revendications 27 à 36, **caractérisé en ce que** la température, à laquelle le film enduit est traité, se situe entre 180°C et 240°C.

38. Procédé selon la revendication 37, **caractérisé en ce que** la température, à laquelle le film enduit est traité, se situe entre 200°C et 230°C.

## Patentansprüche

1. Biaxial gezogene Verbundfolie auf Polyester-Basis mit verbesserten Barriereeigenschaften gegenüber Gasen, **dadurch gekennzeichnet, dass** sie eine Grundfolie auf Polyester-Basis von 5 µm bis 50 µm aufweist, welche auf einer ihrer zwei Seiten mit einer Polyvinylalkohol enthaltenden Schicht überzogen ist, der Polyvinylalkohol einen mittleren Polymerisationsgrad von 350 oder mehr und einen Hydrolysegrad von 95 % oder mehr hat, sowie einen wasserdispergierbaren Copolyester aus Oxysulfonyl-Einheiten aufweist, und dass die Verbundfolie eine bei 23°C und 50 % relativer Luftfeuchtigkeit gemessene Sauerstoffdurchlässigkeit ( Messung durchgeführt auf einem Gerät der Marke OXTRAN, Typ 300 H, Firma MODERN CONTROL INC.) von 5 cm³/m²/24 h oder weniger hat.

2. Folie nach Anspruch 1, **dadurch gekennzeichnet, dass** der Polyester unter den Polyterephtalaten oder den Alkylendiol-Polynaphtalin-Dicarboxylaten ausgewählt wird.

3. Folie nach Anspruch 2, **dadurch gekennzeichnet, dass** der Polyester aus den Polyterephtalaten des Äthylenglykol- oder des Butandiol-1,4-Terephtalaten ausgewählt wird und die Co-Polyester mindestens 80 % in Molen Äthylenglykol-Terephtalat als Einheiten enthalten.

4. Folie nach einem der Ansprüche 1 bis 3, **dadurch gekennzeichnet, dass** die mittlere Rauheit Rz der Grundfolie (sowie in der Norm DIN 4768 definiert) 0,40 µm oder weniger auf der Seite der Folie ist, welche die Schicht aus Polyvinylalkohol und wasserdispergierbarem Copolyester aufweist, und dass diese Seite nicht mehr als 20 Buckel enthält, welche eine Höhe von 1 µm und mehr aufweisen, und wobei nicht mehr als 150 Erhebungen eine Höhe zwischen 0,4 und 1µm pro mm² aufweisen, wenn die Dicke der Schicht, welche Polyvinylalkohol und wasserdispergierbaren Copolyester aus den Einheiten Oxysulfonyl beinhaltet, unterhalb von 0,6 µm liegt.

5. Folie nach einem der Ansprüche 1 bis 4, **dadurch gekennzeichnet, dass** die Seite der Folie, welche eine Schicht aus Polyvinylalkohol und wasserdispergierbarem Copolyester aufweist, im Durchschnitt nicht mehr als 20 Buckel mit einer Höhe von 1 µm und mehr und nicht mehr als 100 Buckel mit einer Höhe zwischen 0,4 und 1 µm pro mm² enthält.

6. Folie nach einem der Ansprüche 1 bis 5, **dadurch gekennzeichnet, dass** der wasserdispergierbare Copolyester aus den Bauteilen Oxysulfonyl, der sich mit dem Polyvinylalkohol in dem Belag befindet, unter den Copolyester-Derivaten mit mindestens einer aromatischen Dicarboxylsäure und mindestens einem 2-wertigen aliphatischen Alkohol ausgewählt wird und eine Vielzahl Oxysulfonyl-Gruppen nach der Formel -(SO₃-) nM ( I ) aufweist, in welcher 1 oder 2 nicht gleich ist, M ein Wasserstoff-Atom, ein Alkali- oder Erdalkali-Metall, ein Ammonium-Kation oder ein quatemäres Ammonium-Kation darstellt.

7. Folie nach Anspruch 6, **dadurch gekennzeichnet, dass** die aromatische Dicarboxylsäure, welche für die Bereitung des wasserdispergierbaren Copolyesters gebraucht wird, unter den Terephtal-, Isophtal, Orthophtal-, Dicarboxylnaphtalin-1,4-Säuren und ihren Mischungen ausgewählt wird.

8. Folie nach Anspruch 7, **dadurch gekennzeichnet, dass** die aromatische Dicarboxylsäure unter den Mischungen von Terephtalsäure mit einer oder mehreren aromatischen Dicarboxylsäuren ausgewählt wird.

9. Folie nach Anspruch 8, **dadurch gekennzeichnet, dass** die aromatische Dicarboxylsäure unter den Mischungen von Terephtalsäure mit Isophtalsäure ausgewählt wird.

10. Folie nach einem der Ansprüche 7 bis 9, **dadurch gekennzeichnet, dass** die in Molen ausgedrückte Menge an Terephtalsäure zwischen 20 % und 99 % der totalen Anzahl von Molen von unsulfonierten 2-wertigen Säuren variiert, und dass der wasserdispergierbare Copolyester Bauteile aus Natrium-Oxysulfonyl-5-Isophtalat aufweist.

11. Folie nach Anspruch 10, **dadurch gekennzeichnet, dass** die in Molen ausgedrückte Menge an Terephtalsäure zwischen 30 % und 95 % variiert.

12. Folie nach einem der Ansprüche 6 bis 11, **dadurch gekennzeichnet, dass** der 2-wertige Alkohol, welcher in die Verbindung aus dem wasserdispergierbaren Copolyester mit Oxysulfonyl-Gruppen eingeführt wird, unter dem Äthylenglykol, dem Butandiol-1,4, dem Butandiol-1,5, dem Propandiol-1,3, dem Propandiol-1,2, dem Dimethyl 2,2, 2 Propandiol-1,3 (oder Neopentylglykol), dem Pentandiol-1,5, dem Hexandiol-1,6, dem Diäthylenglykol, dem Triethylenglycol, dem Tetraäthylenglykol, dem Cyclohexandimethanol ausgewählt wird.

13. Folie nach Anspruch 12, **dadurch gekennzeichnet, dass** der in die Verbindung des wasserdispergierbaren Copolyesters mit Oxysulfonyl-Gruppen eingeführte 2-wertige Alkohol unter dem Äthylenglykol und seinen Oligomeren ausgewählt wird.

14. Folie nach einem der Ansprüche 6 bis 13, **dadurch gekennzeichnet, dass** die Bauteile Dicarboxylsäure auf Oxysulfonyl-Basis in dem wasserdispergierbaren Copolyester in 5 bis 30 Molen von 100 Molen der Bauteile Dicarboxylsäure vertreten sind.

15. Folie nach Anspruch 14, **dadurch gekennzeichnet, dass** die Einheiten Dicarboxylsäure auf Oxysulfonyl-Basis in dem wasserdispergierbaren Copolyester in 8 bis 15 Molen von 100 Molen der Bauteile Dicarboxylsäure vertreten sind.

16. Folie nach einem der Ansprüche 1 bis 15, **dadurch gekennzeichnet, dass** der Belag aus Polyvinylalkohol und wasserdispergierbarem Copolyester in einem Gewichtsverhältnis Polyvinylalkohol/wasserdispergierbarer Copolyester von 99/1 bis 50/50 stehen.

17. Folie nach Anspruch 16, **dadurch gekennzeichnet, dass** der Belag aus Polyvinylalkohol und wasserdispergierbarem Copolyester in einem Gewichtsverhältnis Polyvinylalkohol/wasserdispergierbarer Copolyester zwischen 97/3 und 80/20 stehen.

18. Folie nach einem der Ansprüche 1 bis 17, **dadurch gekennzeichnet, dass** der Belag aus Polyvinylalkohol und wasserdispergierbarem Copolyester eine Dicke von 3 µm und weniger hat.

19. Folie nach einem der Ansprüche 1 bis 18, **dadurch gekennzeichnet, dass** die Verbundfolie ausserdem auf der freien Seite des Belages aus Polyvinylalkohol und wasserdispergierbarem Copolyester eine Polyvinylalkohol-Schicht aufweist.

20. Folie nach einem der Ansprüche 1 bis 19, **dadurch gekennzeichnet, dass** die Verbundfolie ausserdem auf einer ihrer Seiten eine Druckschicht oder einen Druckfond oder noch auf der freien Seite des Belages aus Polyvinylalkohol und wasserdispergierbarem Copolyester oder der freien Seite der zusätzlichen Polyvinylalkohol -Schicht eine Metallschicht aufweist.

21. Folie nach Anspruch 20, **dadurch gekennzeichnet, dass** die Metallschicht, welche sich auf der Oberfläche des Belages aus Polyvinylalkohol/wasserdispergierbarem Copolyester, die keinen Kontakt mit der Polyesterfolie hat, oder auf der freien Seite der zusätzlichen Polyvinylalkohol-Schicht befindet, aus einem unter Aluminium, Kupfer, Chrom, Nickel,Silber ausgewählten Metall zusammengesetzt ist.

22. Folie nach Anspruch 21, **dadurch gekennzeichnet, dass** die Metallschicht, welche sich auf der Oberfläche des Belages aus Polyvinylalkohol/wasserdispergierbarem Copolyester, die keinen Kontakt mit der Polyesterfolie hat, oder auf der freien Seite der zusätzlichen Polyvinylalkohol-Schicht befindet, aus Aluminium hergestellt ist.

23. Folie nach einem der Ansprüche 20 bis 22, **dadurch gekennzeichnet, dass** die Dicke der Metallschicht zwischen 0,01 µm und 0,06 µm liegt.

24. Folie nach einem der Ansprüche 1 bis 23, **dadurch gekennzeichnet, dass** die Grundfolie aus Polyester aus 2 Schichten mit unterschiedlichen Rauheiten Rz gebildet wird.

25. Folie nach Anspruch 24, **dadurch gekennzeichnet, dass** die asymmetrische Grundfolie aus Polyester nach dem Coextrusionsverfahren aus 2 Polyestern hergestellt wird, welche unterschiedliche Beschwerungsgrade und gegebenen-falls unterschiedliche Chargen aufweisen.

26. Folie nach Anspruch 25, **dadurch gekennzeichnet, dass** für die 2 coextrudierten Schichten der gleiche Polyester eingesetzt wird, und dass die Schicht vor der Aufnahme der Polyvinylalkohol-Schicht geringer beladen ist.

27. Verfahren zur Herstellung von Verbundfolien nach einem der Ansprüche 1 bis 26, **dadurch gekennzeichnet, dass** man die Grundfolie aus Polyester auf einer seiner Seiten mittels einer wässrigen Lösung aus einem, mindestens 95 % Vinylalkohol-Bauteile enthaltenden Polyvinylalkohol, wobei der Polyvinylalkohol in wässriger Lösung von 4 % und bei 20°C eine Viskosität von 4 mPa.s oder höher ( gemessen mit Hilfe eines Viskosimeters Marke Brookfield) aufweist, und einem wasserdispergierbaren Copolyester überzieht, und dass man die damit überzogene Folie bei einer Temperatur von 170°C oder höher thermisch behandelt.

28. Verfahren nach Anspruch 27, **dadurch gekennzeichnet, dass** die Seite der Polyesterfolie, welche mit der Lösung Polyvinylalkohol/wasserdispergierbarer Copolyester überzogen ist, eine durchschnittliche Rauheit Rz ( wie in der Norm DIN 4768 definiert ) von 0,4 µm und niedriger aufweist und durchschnittlich nicht mehr als 20 Buckel mit einer Höhe von 1µm oder mehr und nicht mehr als 150 Buckel mit einer Höhe zwischen 0,4 und 1 µm pro mm² enthält, wenn man einen Belag aus Polyvinylalkohol/wasserdispergierbarem Copolyester mit einer Dicke niedriger als 0,6 µm realisieren möchte.

29. Verfahren nach einem der Ansprüche 27 oder 28, **dadurch gekennzeichnet,dass** das Überziehen der Grundfolie aus Polyester mit einer wässrigen Lösung von Polyvinylalkohol und wasserdispergierbarem Copolyester in direkter Reihenfolge oder als Nachbehandlung geschieht.

30. Verfahren nach Anspruch 29, **dadurch gekennzeichnet, dass** das Überziehen in direkter Reihenfolge geschieht.

31. Verfahren nach einem der Ansprüche 27 bis 30, **dadurch gekennzeichnet, dass** die wässrige Lösung von Polyvinylalkohol/wasserdispergierbarem Copolyester bei einer Konzentration von 1 bis 20 Gewichts % eingesetzt wird.

32. Verfahren nach Anspruch 31, **dadurch gekennzeichnet, dass** die wässrige Lösung von Polyvinylalkohol/wasserdispergierbarem Copolyester bei einer Konzentration von 5 bis 15 Gewichts % eingesetzt wird.

33. Verfahren nach einem der Ansprüche 27 bis 32, **dadurch gekennzeichnet, dass** das Gewichtsverhältnis Polyvinylalkohol/wasserdispergierbarer Copolyester in der wässrigen Lösung 99/1 bis 50/50 ist.

34. Verfahren nach Anspruch 33, **dadurch gekennzeichnet, dass** das Gewichtsverhältnis Polyvinylalkohol/wasserdispergierbarer Copolyester in der wässrigen Lösung zwischen 97/3 und 80/20 liegt.

35. Verfahren nach einem der Ansprüche 27 bis 34, **dadurch gekennzeichnet, dass** der eingesetzte Polyvinylalkohol mindestens 97 % Vinylalkohol-Bauteile aufweist.

36. Verfahren nach Anspruch 35, **dadurch gekennzeichnet, dass** der eingesetzte Polyvinylalkohol mindestens 98 % Vinylalkohol-Bauteile aufweist.

37. Verfahren nach einem der Ansprüche 27 bis 36, **dadurch gekennzeichnet, dass** die Temperatur, bei der die überzogene Folie behandelt wird, zwischen 180°C und 240°C liegt.

38. Verfahren nach Anspruch 37, **dadurch gekennzeichnet, dass** die Temperatur, bei der die überzogene Folie behandelt wird, zwischen 200°C und 230°C liegt.

## Claims

1. A composite film stretched biaxially, based on a polyester and having improved barrier properties to gases, **characterised in that** it includes a polyester film base of 5 µm to 50 µm, coated on one of its two faces with a layer including a polyvinyl alcohol which has an average degree of polymerisation in number equal to or more than 350 and a degree of hydrolysis equal to or more than 95 % and a water-dispersible copolyester with sulphonyloxy residues, said composite film exhibiting a permeability to oxygen measured at 23 °C under a relative humidity of 50 % (the measurements being carried out using an « OXTRAN » apparatus, type 300H from the firm MODERN CONTROL INC.) equal to or less than 5 cm³ / m² / 24 h.

2. A film according to claim 1, **characterised in that** the polyester is selected from polyterephthalate or from polynaphthalene dicarboxylates of alkylene diols.

3. A film according to claim 2, **characterised in that** the polyester is selected from polyterephthalate of ethylene glycol or of 1,4-butanediol and the copolyesters including at least 80 % in moles of ethylene glycol terephthalate residues.

4. A film according to one of claims 1 to 3, **characterised in that** the average roughness Rz of the film base (such as defined in standard DIN 4768) is less than or equal to 0.40 µm on the face of the film carrying the layer of the polyvinyl alcohol and of the water-dispersible copolyester and this face exhibits, on the average, not more than 20 peaks having a height equal to or more than 1 µm and not more than 150 peaks having a height comprised between 0.4 and 1 micrometre per square millimetre, when the thickness of the layer including the polyvinyl alcohol and the water-soluble copolyester with sulphonyloxy residues is less than 0.6 µm.

5. A film according to one of claims 1 to 4, **characterised in that** the face of the film base carrying the layer of the polyvinyl alcohol and of the water-dispersible copolyester has, on the average, not more than 20 peaks having a height equal to or more than 1 micrometre and not more than 100 peaks having a height comprised between 0.4 and 1 micrometre, per square millimetre.

6. A film according to one of claims 1 to 5, **characterised in that** the water-dispersible copolyester with sulphonyloxy residues combined with the polyvinyl alcohol in the coating is selected from copolyesters derived from at least one aromatic dicarboxylic acid and from at least one aliphatic diol, and carrying a plurality of sulphonyloxy groups of the general formula (I) :
- (SO₃-)ₙM (I)
in which n is equal to 1 or 2, M is a hydrogen atom, an alkali metal, an earth-alkali metal, a cationic ammonium or a cationic quaternary ammonium.

7. A film according to claim 6, **characterised in that** the aromatic dicarboxylic acid used for preparing the water-dispersible copolyester is selected from terephthalic acid, isophthalic acid, orthophthalic acid, naphthalene 1,4-dicarboxylic acid and their mixtures.

8. A film according to claim 7, **characterised in that** the aromatic dicarboxylic acid is selected from mixtures of terephthalic acid with one or several other aromatic dicarboxylic acids.

9. A film according to claim 8, **characterised in that** the aromatic dicarboxylic acid is selected from mixtures of terephthalic acid with isophthalic acid.

10. A film according to one of claims 7 to 9, **characterised in that** the amount of terephthalic acid expressed in moles is in the range from 20 to 99 % of the total number of moles of non-sulphonated diacids and **in that** the water-dispersible copolyester includes sodium 5-oxysulphonyl-isophthalate residues.

11. A film according to claim 10, **characterised in that** the amount of terephthalic acid expressed in moles is in the range from 30 to 95 %.

12. A film according to one of claims 6 to 11, **characterised in that** the diol entering into the composition of the water-dispersible copolyester with sulphonyloxy groups, is selected from ethylene glycol, 1,4-butanediol, 1,5-butanediol, 1,3-propanediol, 1,2-propanediol, 2,2-diméthyl-1,3-propanediol (or neopentylglycol), 1,5-pentanediol, 1,6-hexanediol, diethylene glycol, triethylene glycol, tetraethylene glycol and cyclohexane dimethanol.

13. A film according to claim 12, **characterised in that** the diol entering into the composition of the water-dispersible copolyester with sulphonyloxy groups, is selected from ethylene glycol and its oligomers.

14. A film according to one of claims 6 to 13, **characterised in that** in the water-dispersible copolyester, the dicarboxylic acid residues with sulphonyloxy groups amount to 5 - 30 moles for 100 moles of the dicarboxylic acid residues.

15. A film according to claim 14, **characterised in that** in the water-dispersible copolyester, the dicarboxylic acid residues with sulphonyloxy groups amount to 8 - 15 moles for 100 moles of the dicarboxylic acid residues.

16. A film according to one of claims 1 to 15, **characterised in that** the coating of the polyvinyl alcohol and of the water-dispersible copolyester exhibits a weight ratio of the polyvinyl alcohol to the water-dispersible copolyester of 99 / 1 to 50/50.

17. A film according to claim 16, **characterised in that** the coating of the polyvinyl alcohol and of the water-dispersible copolyester exhibits a weight ratio of the polyvinyl alcohol to the water-dispersible copolyester comprised between 97/3 and 80/20.

18. A film according to one of claims 1 to 17, **characterised in that** the coating of the polyvinyl alcohol and of the water-dispersible copolyester has a thickness equal to or less than 3 µm.

19. A film according to one of claims 1 to 18, **characterised in that** said composite film further carries on the free face of coating of the polyvinyl alcohol and of the water-dispersible copolyester, a layer of polyvinyl alcohol.

20. A film according to one of claims 1 to 19, **characterised in that** said composite film further carries a printed layer or a printed primer on one of its faces, or **in that** it further carries a metal layer on the free face of the coating of the polyvinyl alcohol and of the water-dispersible copolyester or on the free face of the additional layer of the polyvinyl alcohol.

21. A film according to claim 20, **characterised in that** the metal layer, which is deposited on the surface of the coating of the polyvinyl alcohol and of the water-dispersible polyester not in contact with the polyester film or which is deposited on the free face of the additional layer of the polyvinyl alcohol, is made of a metal selected from aluminium, copper, chromium, nickel and silver.

22. A film according to claim 21, **characterised in that** the metal layer, which is deposited on the surface of the coating of the polyvinyl alcohol and of the water-dispersible polyester not in contact with the polyester film or which is deposited on the free face of the additional layer of the polyvinyl alcohol, is made of aluminium.

23. A film according to one of claims 20 to 22, **characterised in that** the thickness of the metal layer is in the range from 0.01 µm to 0.06 µm.

24. A film according to one of claims 1 to 23, **characterised in that** the polyester base film is comprised of two layers exhibiting different roughnesses Rz.

25. A film according to claim 24, **characterised in that** the dissymetric polyester film base is produced with a technique of co-extrusion of 2 polyesters having different filler contents and possibly including fillers of differing nature.

26. A film according to claim 25, **characterised in that** the polyester used is the same for the two co-extruded layers and **in that** the layer receiving the polyvinyl alcohol layer is the less filled one.

27. A process for the production of composite films according to one of claims 1 to 26, **characterised in that** the polyester base film is coated, on one of its faces, by means of an aqueous solution including a polyvinyl alcohol exhibiting at least 95 % of vinyl alcohol residues, said polyvinyl alcohol exhibiting in an aqueous 4 % solution and at 20 °C a viscosity equal to or more than 4 mPa.s (measured using a viscosimeter of the Brookfield LV type) and a water-dispersible copolyester and **in that** said coated film is treated thermally at a temperature equal to or more than 170 °C.

28. A process according to claim 27, **characterised in that** the face of the polyester film on which the coating of the polyvinyl alcohol and of the water-dispersible copolyester is applied exhibits, an average roughness Rz (such as defined in standard DIN 4768) less than or equal to 0.40 µm and has, on the average, not more than 20 peaks having a height equal to or more than 1 micrometre and not more than 150 peaks having a height comprised between 0.4 and 1 micrometre per square millimetre, when a coating including the polyvinyl alcohol and the water-dispersible copolyester having a thickness less than 0.6 micrometres is to be applied, if desired.

29. A process according to one of claims 27 or 28, **characterised in that** the coating of the polyester film base with an aqueous solution of the polyvinyl alcohol and of the water-dispersible copolyester is carried out on line or as a separate operation.

30. A process according to claim 29, **characterised in that** the coating is carried out on-line.

31. A process according to one of claims 27 to 30, **characterised in that** the aqueous solution of the polyvinyl alcohol and of the water-dispersible copolyester is used at a concentration in the range from 1 % to 20 % in weight / weight.

32. A process according to claim 31, **characterised in that** the aqueous solution of the polyvinyl alcohol and of the water-dispersible copolyester is used at a concentration in the range from 5 % to 15 % in weight / weight.

33. A process according to one of claims 27 to 32, **characterised in that** the weight ratio of the polyvinyl alcohol to the water dispersible copolyester in the aqueous solution is between 99/1 and 50/50.

34. A process according to claim 33, **characterised in that** the weight ratio of the polyvinyl alcohol to the water-dispersible copolyester in the aqueous solution is between 97/3 and 80/20.

35. A process according to one of claims 27 to 34, **characterised in that** the polyvinyl alcohol used includes at least 97 % of vinyl alcohol residues.

36. A process according to claim 35, **characterised in that** the polyvinyl alcohol used includes at least 98 % of vinyl alcohol residues.

37. A process according to one of claims 27 to 36, **characterised in that** the temperature at which the coated film is treated, is between 180 °C and 240 °C.

38. A process according to claim 37, **characterised in that** the temperature at which the coated film is treated, is between 200 °C and 230 °C.
